# EUROPEAN PATENT APPLICATION

(11) **EP 4 780 074 A1**
(43) Date of publication of application: **22.07.2026**
(21) Application number: 24956897.3
(22) Date of filing: 28.11.2024
(51) Int. Cl.: H04W 36/08, H04W 36/36, H04W 36/00, H04W 36/24, H04W 84/06

(54) **APPARATUS AND METHOD FOR PERFORMING HANDOVER IN WIRELESS COMMUNICATION SYSTEM**

(30) Priority: 23.10.2024 KR 20240145909
(71) Applicant: Ajou University Industry-Academic Cooperation Foundation and Technology, Suwon-si, Gyeonggi-do 16499 (KR)
(72) Inventor: KIM, Jae Hyun, Seoul 06602 (KR); LEE, Won Jae, Suwon-si, Gyeonggi-do 16497 (KR); KIM, Tae Youn, Suwon-si, Gyeonggi-do 16237 (KR); CHU, Heon Woo, Pyeongtaek-si, Gyeonggi-do 18008 (KR); MOON, Tae Han, Suwon-si, Gyeonggi-do 16500 (KR); LEE, Jae Yeol, Suwon-si, Gyeonggi-do 16517 (KR)
(74) Representative: Winter, Brandl - Partnerschaft mbB
(86) International application number: PCT/KR2024/019156
(87) International publication number: WO 2026/089114

(57) **Abstract**

The present disclosure relates to a wireless communication system, and particularly, to a method for performing a handover in a wireless communication system. A method for operating a base station includes receiving a measurement report message from a terminal, transmitting a handover request message to a target cell and a candidate cell based on the measurement report message, receiving a handover request acknowledge message from the target cell and the candidate cell, transmitting a handover command message to the terminal, receiving a conditional handover indication message from the terminal upon detecting a conditional handover event based on an additional measurement of the terminal for the target cell and the candidate cell, transmitting the conditional handover indication message to the target cell, and transmitting an uplink grant to the terminal upon receiving the uplink grant from the target cell, wherein a time difference between transmission of the conditional handover indication from the terminal and reception of the uplink grant at the terminal may be less than or equal to a set time threshold.

## Description

### Technical Field

The present disclosure relates to a wireless communication system, and particularly, to an apparatus and method for performing a handover in a wireless communication system.

### Background Art

With the development of mobile communication services, non-terrestrial networks (NTN) without spatial constraints are attracting attention, and in particular, low earth orbit (LEO) satellites are expected to play a major role. Accordingly, the 3^{rd} Generation Partnership Project (3GPP) is proceeding with standardization for the non-terrestrial networks without spatial constraints to provide effective communication services.

This research is a research conducted with the support of the Science and Technology Commercialization Promotion Agency with the financial resource of the Ministry of Science and ICT in 2024 (RS-2024-00423453, Intellectual property (IP) advancement and commercialization for promoting commercialization of next-generation low earth orbit (LEO) constellation satellite utilization technology).

This research is a research conducted with the support of the Institute of Information & Communications Technology Planning & Evaluation (IITP) with the financial resource of the government (Ministry of Science and ICT) in 2024 (No. RS-2021-II210794, Development of 3-dimensional spatial mobile communication technology), (No. RS-2022-II220704, Development of 3D-NET core technology for supporting high-speed moving objects).

### Disclosure

### Technical Problem

The present disclosure is directed to providing an apparatus and method for effectively performing a handover in a wireless communication system.

The present disclosure is directed to providing an apparatus and method for effectively performing a random access channel(RACH)-less handover in a wireless communication system.

The present disclosure is directed to providing an apparatus and method for performing a conditional handover (CHO) in a wireless communication system.

The present disclosure is directed to providing an apparatus and method for performing a handover between a terrestrial base station and a satellite base station in a wireless communication system.

The present disclosure is directed to providing an apparatus and method for enhancing handover performance of a non-terrestrial network environment in a wireless communication system.

The present disclosure is directed to providing an apparatus and method for applying a conditional handover technology and a RACH-less handover technology to a non-terrestrial network in a wireless communication system.

The present disclosure is directed to providing an apparatus and method for combining a conditional handover and a RACH-less handover for a non-terrestrial network in a wireless communication system.

The present disclosure is directed to providing an apparatus and method for supporting a conditional RACH-less handover that combines a conditional handover including a timing basis, signal strength, a distance, and an elevation angle, and a RACH-less handover in a wireless communication system.

The present disclosure relates to an apparatus and method for selecting a handover request message link in a wireless communication system.

### Technical Solution

According to an aspect of the present disclosure, a method of operating a base station in a wireless communication system is disclosed. The method includes receiving a measurement report message from a terminal, transmitting a handover request message to a target cell and a candidate cell based on the measurement report message, receiving a handover request acknowledge message from the target cell and the candidate cell, transmitting a handover command message to the terminal, receiving a conditional handover indication message from the terminal upon detecting a conditional handover event based on an additional measurement of the terminal for the target cell and the candidate cell, transmitting the conditional handover indication message to the target cell, and transmitting an uplink grant to the terminal upon receiving the uplink grant from the target cell, wherein a time difference between transmission of the conditional handover indication from the terminal and reception of the uplink grant at the terminal may be less than or equal to a set time threshold.

According to another aspect of the present disclosure, a base station in a wireless communication system is disclosed. The base station includes a transceiver and a processor coupled to the transceiver, and the processor is configured to: receive a measurement report message from a terminal; transmit a handover request message to a target cell and a candidate cell based on the measurement report message; receive a handover request acknowledge message from the target cell and the candidate cell; transmit a handover command message to the terminal; receive a conditional handover indication message from the terminal upon detecting a conditional handover event based on an additional measurement of the terminal for the target cell and the candidate cell; transmit the conditional handover indication message to the target cell; and transmit an uplink grant to the terminal upon receiving the uplink grant from the target cell, wherein a time difference between transmission of the conditional handover indication from the terminal and reception of the uplink grant at the terminal may be less than or equal to a set time threshold.

According to still another aspect of the present disclosure, a method of operating a terminal in a wireless communication system is disclosed. The method includes transmitting a measurement report message to a base station, performing a measurement for a target cell and a candidate cell upon receiving a handover command message from the base station, transmitting a conditional handover indication message to the base station based on satisfaction of a conditional handover event of at least one of the target cell and the candidate cell, and performing a random access channel (RACH)-less handover or a conditional handover with the target cell upon receiving an uplink grant before passage of a time threshold following the transmission of the indication message.

According to yet another aspect of the present disclosure, a terminal in a wireless communication system is disclosed. The terminal includes a transceiver and a processor coupled to the transceiver, and the processor is configured to: transmit a measurement report message to a base station; perform a measurement for a target cell and a candidate cell upon receiving a handover command message from the base station; transmit a conditional handover indication message to the base station based on satisfaction of a conditional handover event of at least one of the target cell and the candidate cell; and perform a random access channel (RACH)-less handover or a conditional handover with the target cell upon receiving an uplink grant before passage of a time threshold following the transmission of the conditional handover indication message.

### Advantageous Effects

According to embodiments of the present disclosure, handovers for terminals using a non-terrestrial network can be effectively performed.

### Description of Drawings

FIG. 1 illustrates an example of a satellite network according to an embodiment of the present disclosure.
FIG. 2 illustrates an example of a handover in a satellite network.
FIG. 3 illustrates another example of a satellite network according to an embodiment of the present disclosure.
FIG. 4 illustrates a configuration of a device in a wireless communication system according to an embodiment of the present disclosure.
FIG. 5 illustrates an example of a random access channel (RACH)-less handover procedure in a wireless communication system according to an embodiment of the present disclosure.
FIG. 6 illustrates an example of a conditional handover procedure in a wireless communication system according to an embodiment of the present disclosure.
FIG. 7 illustrates an example of a procedure of operating a terminal in a wireless communication system according to an embodiment of the present disclosure.
FIG. 8 illustrates an example of a procedure of performing a handover based on a time threshold according to an embodiment of the present disclosure.
FIG. 9 illustrates an example of a procedure of operating a serving cell in a wireless communication system according to an embodiment of the present disclosure.
FIG. 10 illustrates an example of a RACH-less handover operation procedure of a neighbor cell in a wireless communication system according to an embodiment of the present disclosure.
FIG. 11 illustrates an example of a conditional handover operation procedure of a target cell in a wireless communication system according to an embodiment of the present disclosure.

### Mode for Invention

For terminology in the present embodiments, common terms, which are widely used now, have been selected in consideration of functions in the embodiments but are subject to alterations according to intentions of those skilled in the art, precedents, or the emergence of new technology. Furthermore, a particular case may have some terms that are randomly selected by an applicant, and those terms will be clarified in detail in corresponding parts. Accordingly, the terms used in the present embodiments should not be interpreted as merely the names of the terms, but should be defined based on the meanings they convey and the overall context of the present embodiments.

As the present disclosure may be subject to various modifications and have various forms, specific embodiments will be described in detail with reference to the accompanying drawings. However, the present embodiments are not limited to a specific disclosure form but are to be understood to include all the modifications, equivalents, and alternatives within the scope and idea thereof. The terms as used in the present specification are provided to merely describe the present embodiments, not intended to limit the embodiments.

Unless otherwise defined, all terms used herein have the same meaning as commonly understood by those skilled in the art to which the present embodiments pertains. The terms as generally defined in dictionaries may be interpreted as having the same or similar meanings as or to contextual meanings of related technology. Unless otherwise defined, the terms should not be interpreted as ideally or excessively formal meanings.

The present disclosure relates to a technology for a handover for a terminal using a non-terrestrial networks (NTNs). A conditional handover (CHO) technology has been developed to reduce handover failure rate in a terrestrial network, and a random access channel (RACH)-less technology has been developed to reduce a handover interruption time and signaling overhead. Such various handover technologies are applicable likewise to an NTN environment. However, when there is no intermediate procedure for efficiently combining a CHO and a RACH-less handover, there may occur a problem of decreased communication performance due to waste of resources or interference. Particularly, since handovers occur frequently in the NTN environment, the problem of communication performance may become more prominent. Accordingly, a new procedure is required to apply a CHO and a RACH-less handover simultaneously to an NTN environment. Thus, the present disclosure proposes a procedure of applying a CHO and a RACH-less handover to an NTN environment.

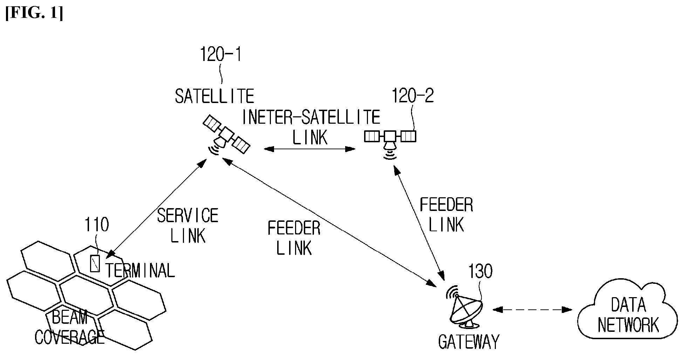

FIG. 1 illustrates an example of a satellite network according to an embodiment of the present disclosure.

Referring to FIG. 1, a satellite network includes a terminal 110, satellites 120-1 and 120-2, and a gateway 130. The terminal 110 is a user device equipped with hardware and software that receive cellular data from the satellite 120-1, and may be a mobile device or a stationary device. For example, the terminal 110 may include a mobile phone, a smart phone, a wearable device, and a user equipment (UE). In addition, the terminal 110 is not limited to the above-described examples but may include all electronic devices capable of cellular communication such as a laptop computer and a tablet PC. The terminal 110 is not limited to the above-described examples. In FIG. 1, the satellite network is illustrated to include a single terminal 110, which is merely an example embodiment to which the present disclosure is not limited, and may certainly include a plurality of terminals 110.

Specifically, the terminal 110 may support a communication protocol specified by the 3rd generation partnership project (3GPP) standards (e.g., the LTE communication protocol, the LTE-A communication protocol, or the NR communication protocol). A plurality of communication nodes 110 to 130 may support a code division multiple access (CDMA) technology, a wideband CDMA (WCDMA) technology, a time division multiple access (TDMA) technology, a frequency division multiple access (FDMA) technology, an orthogonal frequency division multiplexing (OFDM) technology, a filtered OFDM technology, a cyclic prefix (CP)-OFDM technology, a discrete Fourier transform-spread-OFDM (DFT-s-OFDM) technology, an orthogonal frequency division multiple access (OFDMA) technology, a single carrier (SC)-FDMA technology, a non-orthogonal multiple access (NOMA) technology, a generalized frequency division multiplexing (GFDM) technology, a filter bank multi-carrier (FBMC) technology, a universal filtered multi-carrier (UFMC) technology, a space division multiple access (SDMA) technology, and the like.

The satellites 120-1 and 120-2 fly along a predetermined orbit and may provide a cell with a certain coverage area by forming a beam toward the ground. In the present disclosure, the satellite 120-1 may be a serving satellite, and the satellite 120-2 may be a target satellite. The gateway 130 provides the satellites 120-1 and 120-2 with a link for accessing the network.

A link between the terminal 110 and the satellite 120-1 is referred to as a service link and may be based on the NR specifications defined in 3GPP. Links between the satellites 120-1 and 120-2 and the gateway 130 are referred to as feeder links and may be based on 3GPP or a radio interface other than 3GPP. An inter-satellite link (ISL) may be used mainly for regenerative satellites.

In the case of a transparent satellite based on an NR-RAN architecture, NR-Uu may be a satellite radio interface for a feeder link and a service link. In the case of a transparent satellite, the satellite performs radio frequency filtering, frequency conversion, and amplification functions. In the case of a regenerative satellite, an on-board function is implemented in the satellite, thereby enabling the satellite to perform not only radio frequency filtering, frequency conversion, and amplification but also some or all base station functions such as switching, routing, coding, modulation, decoding, and demodulation.

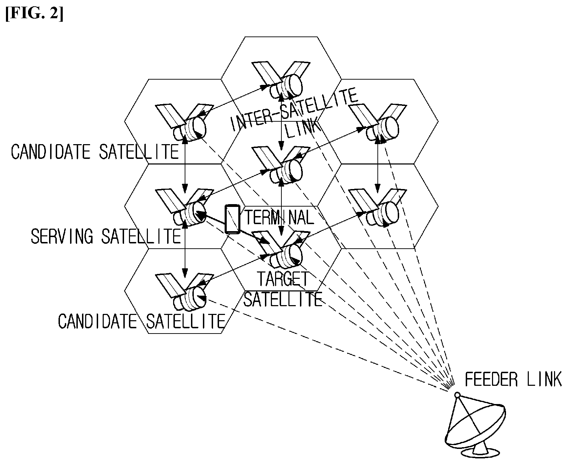

FIG. 2 illustrates an example of a handover in a satellite network.

Referring to FIG. 2, each satellite according to the present disclosure (the serving satellite of FIG. 2, a candidate satellite, and a target satellite) may provide a cell having a predetermined area of coverage to a terminal. In addition, each satellite may be connected to the gateway 130 via a feeder link. Here, the link may be a link based on the NR specification. Alternatively, a link that is newly defined in an evolved next-generation wireless communication system may be adaptively applied, or links based on various interfaces of a communication system that is introduced based on not the NR specification but the requirements of industry may be applied. Hereinafter, in the present disclosure, a serving cell, a target cell, and a candidate cell may be mentioned, and the cells may correspond to a serving satellite, a target satellite, and a candidate satellite, respectively, and may be used interchangeably.

The serving satellite may be a satellite that is currently connected to a terminal in a satellite network and provides communication. For example, the serving satellite may include a geostationary satellite (GEO), a low earth orbit (LEO) satellite, a medium earth orbit (MEO) satellite, a polar orbit satellite, an elliptical orbit satellite, and the like, and is not limited to types thereof. In addition, a satellite described in the present disclosure is not limited to a specific configuration and may include an arbitrary satellite or combinations of satellites capable of a functional access between the gateway 130 and the terminal 110.

The target satellite may be a satellite that is a replacement of a serving satellite when the terminal 110 deviates a beam coverage of the serving satellite or is positioned near the boundary of the coverage so that the strength of a signal received by the terminal 110 satisfies a handover condition.

The candidate satellite may be a satellite that is selectable as a target satellite in a satellite network. That is, the candidate satellite may be determined based on at least the visibility, signal strength, connection stability, delay time, and network load of the satellite. Meanwhile, hereinafter, a neighbor cell may be mentioned, and the neighbor cell may be a neighbor satellite including a target satellite and a candidate satellite that may be referred to as a target cell and a candidate cell respectively.

In the present disclosure, the terminal 110 periodically measures signal strength of a serving satellite and a neighbor satellite base station and reports the signal strength and a time based on its communication service to the serving satellite. Then, the terminal 110 attempts a handover to a target satellite when the strength of a signal received from the serving satellite satisfies a predetermined handover condition.

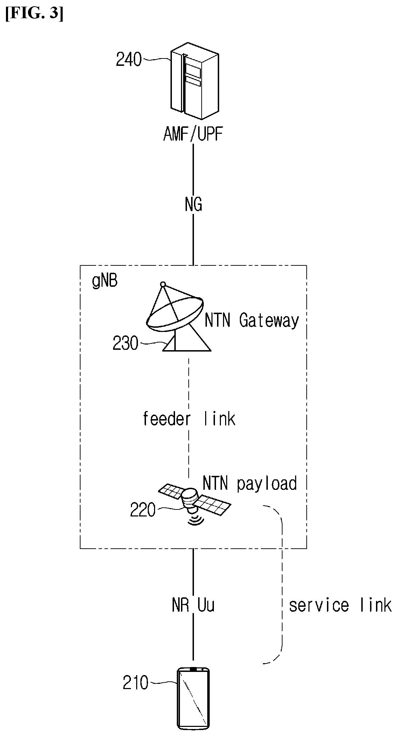

FIG. 3 illustrates another example of a satellite network according to an embodiment of the present disclosure. FIG. 3 illustrates an example of an NTN that provides non-terrestrial access to a UE 210 by using an NTN payload 220 and an NTN gateway 230. Here, the UE 210 may have the actually same configuration as that of the terminal 110 described in FIG. 1. Referring to FIG. 2, a link between the NTN payload 220 and the UE 210 is a service link and may be based on a Uu interface. A link between the NTN payload 220 and the NTN gateway 230 is a feeder link. A link between the NTN gateway and an AMF/UPF 240 may be based on an NG interface. The NTN payload 220 may transparently forward a wireless protocol received from the UE 210 via a service link to the NTN gateway 230. Similarly, the NTN payload 220 may transparently forward a wireless protocol received from the NTN gateway 230 via a feeder link to the UE 210.

To this end, the NTN payload 220 may support the following connectivity. A base station may serve a plurality of NTN payloads. An NTN payload may be served by a plurality of base stations.

The NTN payload 220 may change a carrier frequency before retransmitting data on a service link. That is, the NTN payload 220 may use different carrier frequencies for a service link and a feed link. For NTN, at least one of an AMF name, an NR cell global identifier (NCGI), a CgNB identifier (ID), a gNB ID, a tracking area identity, single network slice selection assistance information (S-NSSAI), a network slice AS group (NSAG), a network identifier (NID), a closed assess group (CAG) ID, and a local NG-RAN node identifier (ID) may be used as a network identifier, and in addition a mapped cell ID may further be used. Herein, a tracking area may correspond to a fixed geographical area.

Non-Geosynchronous Orbit (NGSO) includes low Earth orbit (LEO), which ranges from approximately 300 km to 1,500 km in altitude, as well as medium Earth orbit (MEO), which ranges from about 7,000 km to 25,000 km in altitude.

Service links may be classified into the following three types: earth-fixed type, quasi-earth-fixed type, and earth-moving type. The earth-fixed type provides a beam(s) continuously covering a same geographical area at every time. For example, a satellite in a geosynchronous orbit (GSO) may provide earth-fixed type service links. The quasi-earth-fixed type provides beams that continuously cover the same geographic area during a limited period, and during other periods, provides beams that cover different geographic areas. For example, a satellite in an NGSO may provide a quasi-earth-fixed type service link by using steerable beams. The earth-moving type provides beams whose coverage areas slide across the Earth's surface. For example, a satellite in an NGSO may provide an earth-moving type service link by using fixed or steerable beams.

By using a satellite in an NGSO, a base station may provide a quasi-earth-fixed cell coverage or an earth-moving cell coverage. By using a satellite in a GSO, a base station may provide an earth-fixed cell coverage. In the case of a NGSO, a switch of service links may refer to a switch of the serving satellite 120-1.

Recently, 3GPP is working on standardization associated with a handover in an NTN. In Rel-17, it was determined to support a CHO to reduce a handover failure rate, and in Rel-18, it was determined to support a RACH-less handover to reduce signaling overhead occurring due to a RACH and reduce a handover interruption time in an NTN environment. In addition, a method of combining a CHO and a RACH-less handover in an NTN environment is under discussion. When the two handover techniques are combined, since a non-terrestrial base station is not aware of a handover execution timing of a terrestrial terminal, an uplink grant may be difficult to transmit through a PDCCH. Accordingly, in order to solve this problem, the present disclosure proposes a technique of combining a CHO and a RACH-less handover based on a timing.

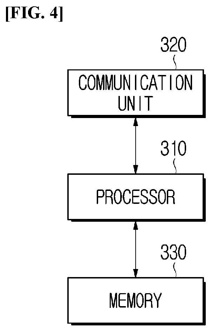

FIG. 4 illustrates a configuration of a device in a wireless communication system according to an embodiment of the present disclosure. The device of FIG. 4 may be understood as a partial structure of any one of devices described with reference to FIG. 1, such as the terminal 110, the satellites 120-1 and 120-2, and the gateway 130.

Referring to FIG. 4, the device may include a processor 210, a communication unit 220, and a memory 330.

The processor 310 may control the overall functions and operations of the device. The processor 310 may include an application-specific integrated circuit (ASIC), another chipset, a logic circuit and/or a data processing device.

The communication unit 320 is connected to the processor 310 and transmits and receives wireless signals. The communication unit 320 may include a baseband circuit for processing wireless signals. For example, the communication unit 320 may include a short-range communication unit, a mobile communication unit, and a broadcast receiving unit. In an embodiment, the communication unit 320 may transmit and receive data with other devices, such as base stations, satellites, and so on.

The memory 330 is hardware that stores various types of data processed by the processor 310. For example, the memory 330 may store an SIR value for a target terminal of a transmitting terminal, as well as information regarding a group of target terminals for each transmitting terminal. In addition, the memory 330 may store applications, drivers, and so on, which are to be executed by the processor 310. The memory (330) may include random access memory (RAM) such as dynamic random access memory (DRAM) and static random access memory (SRAM), read-only memory (ROM), electrically erasable programmable read-only memory (EEPROM), CD-ROM, Blu-ray or other optical disk storage, hard disk drive (HDD), solid state drive (SSD), or flash memory.

The structure of FIG. 4 may be understood as at least a part of a terminal, a base station, a satellite, and a gateway. When the structure of FIG. 4 is a part of a satellite, the satellite may further include other hardware devices for orbital flight, apart from the components exemplified in FIG. 4. When the structure of FIG. 4 is a part of a gateway or a base station, the gateway or the base station may further include a component for supporting wired communication.

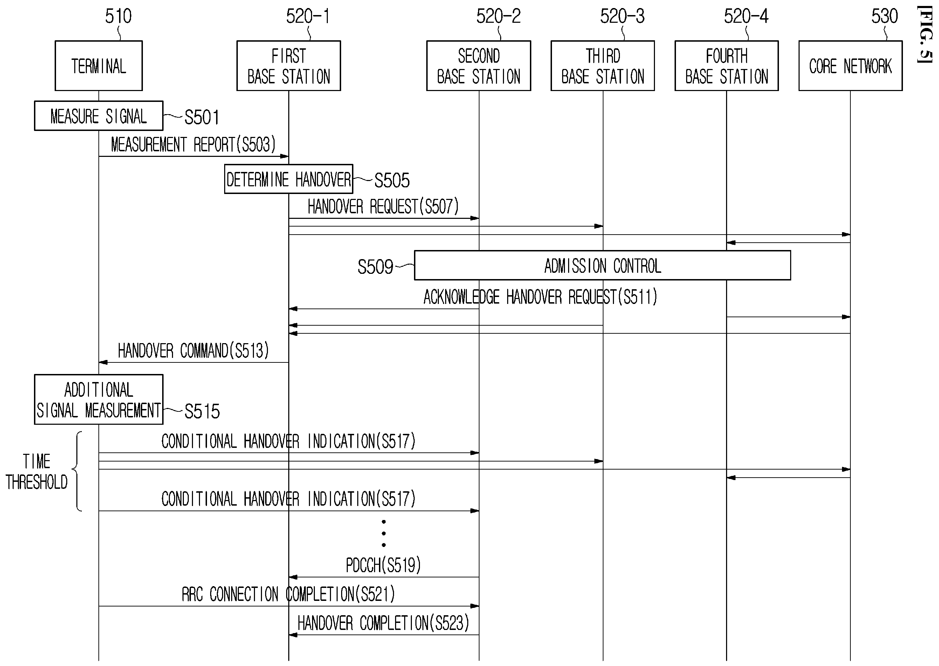

FIG. 5 illustrates an example of a random access channel (RACH)-less handover procedure in a wireless communication system according to an embodiment of the present disclosure. Hereinafter, for convenience of description, a serving satellite (or a serving cell) will be referred to and described as a first base station 520-1, and each of a target satellite (or a target cell) and a candidate satellite (or a candidate cell) may correspond to any one of a second base station 520-2, a third base station 520-3, and a fourth base station 520-4 and may be changed in a procedure described below. In addition, the base stations 520-2, 520-3, and 520-4 may be collectively referred to as neighbor cells or neighbor base stations.

Referring to FIG. 5, in step S501, a terminal 510 measures a signal. Specifically, the terminal 510 measures signal strength of the base stations 520-1, 520-2, 520-3, and 520-4 to reserve a resource for a handover. The terminal 510 may measure the strength of a signal at a predetermined cycle, and the predetermined cycle may be referred to as a measurement interval in the present disclosure.

Specifically, the terminal 510 may measure the signal strength of the base stations 520-1, 520-2, 520-3, and 520-4 and thus detect a preparation event for a handover. As an example, when the strength or quality of a measured signal is less than or equal to a predefined threshold or within a predetermined range, the terminal 510 may determine that a preparation event for a handover is detected. In addition, as an example, when the strength or quality of signals provided by the neighbor base stations 520-2, 520-3, and 520-4 exceeds the strength or quality of a signal provided by the first base station 520-1 that is a serving cell by a specific threshold, the terminal 510 may determine that a preparation event for a handover is detected.

In step S503, the terminal 510 transmits a measurement report to the first base station 520-1. Specifically, the terminal 510 periodically measures the strength of signals of the first base station 520-1 and the base stations 520-2, 520-3, and 520-4 and transmits a measurement report message. The measurement report may include at least a portion of set elements of the measurement report. For example, the measurement configuration of a measurement report may include a measurement object, a reporting configuration, a measurement ID, a quantity configuration, and a measurement gap. As an example, the terminal 510 may measure at least one of a signal to interference and noise ratio (SINR), reference signal received quality (RSRQ), and reference signals received power (RSRP) for the first base station 520-1 and the base stations 520-2, 520-3, and 520-4. Furthermore, the terminal 510 may measure a received signal strength indicator (RSSI), which is the power strength of a received signal, and a signal to noise ratio (SNR) that is a ratio between a signal and noise, but is not limited thereto.

In step S505, the first base station 520-1 determines a handover. Specifically, the first base station 520-1 identifies at least one of RSRP, RSRP, or SINR through the received measurement report. Here, the first base station 520-1 may determine a handover when the measured strength or quality of a signal is less than or equal to a predefined threshold or within a predetermined range. In addition, as an example, when the strength or quality of signals provided by the neighbor base stations 520-2, 520-3, and 520-4 exceeds the strength or quality of a signal provided by the first base station 520-1 that is a serving cell by a specific threshold, the first base station 520- 1 may determine a handover.

In step S507, the first base station 520-1 transmits a handover request. Specifically, the first base station 520-1 transmits a handover request message to a target cell. The target cell may be determined based on measurement reports for the base stations 520-2, 520-3, and 520-4. As an example, the target cell may be determined based on RSRP, an RSSI, RSRQ, and an SINR for the base stations 520-2, 520-3, and 520-4, a traffic load of each base station, a priority order, a speed of the terminal 510, a frequency band, a call state, and UE capabilities. Hereinafter, for convenience of description, it is assumed that the second base station 520-2 is determined to be a target cell, and it should be noted that the target cell may be changed according to the progress of the steps. Likewise, the third base station 520-3 and the fourth base station 520-4 are described under an assumption that the third base station 520-3 and the fourth base station 520-4 are determined as candidate cells, but may be changed according to the progress of the steps.

The handover request message includes information on the terminal 510 and may include a UE identity, a source cell ID, a target cell ID, a terminal context, target cell information, an E-UTRAN radio access bearer (E-RAB), and the like, and is not limited thereto. Meanwhile, the first base station 520-1 may transmit the handover request message to the third base station 520-3 and the fourth base station 520-4, which are candidate cells. For example, the first base station 520-1 may directly transmit the handover request message to the third base station 520-3 or indirectly transmit the handover request message via a core network 530. Likewise, it goes without saying that the first base station 520-1 may transmit the handover request message to the second base station 520-2, which is a target cell, through the core network 530. That is, the first base station 520-1 transmits the handover request message to candidate satellites satisfying a handover event. Here, the handover request message may be transmitted through an inter satellite link (ISL) or a feeder link. The serving cell 520-1 may determine a link by comparing a delay time occurring through the inter satellite link and a delay time occurring through the feeder link, and transmit the handover request message by utilizing the link.

In step S509, each of the second base station 520-2 that is a target cell and the third base station 520-3 and the fourth base station 520-4 that are candidate cells performs admission control. Specifically, the second base station 520-2 determines whether to accept a handover request based on the handover request message and may reject the handover request when network resources are insufficient or quality degradation is concerned. For example, the second base station 520-2 may determine whether to accept the handover request by calculating an available bandwidth, frequency resources, a cell capacity, quality of service (QoS) requirements, and the like.

In step S511, each of the second base station 520-2 that is a target cell and the third base station 520-3 and the fourth base station 520-4 that are candidate cells transmits a handover request acknowledge. Specifically, the second base station 520-2 transmits a handover request acknowledge message to the first base station 520-1 when it is determined that a handover is possible as a result of performing the admission control. Meanwhile, the third base station 520-3 and the fourth base station 520-4 may transmit the handover request acknowledge message to the first base station 520-1. For example, the third base station 520-3 and the fourth base station 520-4 may directly transmit the handover request acknowledge message to the first base station 520-1 or indirectly transmit the handover request acknowledge message via the core network 530. Likewise, it goes without saying that the second base station 520-2 may transmit the handover request acknowledge message to the first base station 520-1 through the core network 530.

In step S513, the first base station 520-1 that is a serving cell transmits a handover command. Specifically, the first base station 520-1 may transmit a handover command message to the terminal 510. The handover command message may include information on the second base station 520-2 that is a target cell and the third base station 520-3 and the fourth base station 520-4 that are candidate cells, and the information may include a cell radio network temporary identifier (C-RNTI), a timing advance (TA), and location information. Thus, the first base station 520-1 may allocate a radio network temporary identifier (RNTI) (e.g., a group (G)-RNTI, a C-RNTI) for broadcast or multicast to the terminal 510. The corresponding RNTI may be provided in advance through system information or may be provided together with a configuration for measurement. The aforementioned steps S501 to S513 may be referred to as a handover preparation step and may be understood as a process of reserving a resource for performing a handover.

In step S515, the terminal 510 performs an additional signal measurement. This may be understood as the terminal 510 detecting an execution event for a handover. Specifically, the terminal 510 additionally measures signal strength of the base stations 520-2, 520-3, and 520-4 that are neighbor cells to perform a RACH-less handover or a CHO. As an example, the terminal 510 may measure at least one of an SINR, RSRQ, and RSRP of the first base station 520-1 that is a serving cell and the base stations 520-2, 520-3, and 520-4 that are the neighbor cells. The following description assumes that the second base station 520-2 is maintained as the target cell and the third base station 520-3 and the fourth base station 520-4 are maintained as the candidate cells, despite the additional signal measurement of the terminal 510, but targets of the target cell and the candidate cells may be certainly changed by the additional signal measurement of the terminal 510.

In step S517, the terminal 510 transmits a CHO indication. Specifically, when at least one of the second base station 520-2 that is the target cell and the third base station 520-3 and the fourth base station 520-4 that are the candidate cells satisfies a CHO event, the terminal 510 transmits a CHO indication message to a cell satisfying the CHO event. As an example, the terminal 510 transmits the CHO indication message to the first base station 520-1, and the first base station 520-1 may transmit the CHO indication message to the second base station 520-2, the third base station 520-3, and the fourth base station 520-4 satisfying the CHO event. As another example, the terminal 510 transmits the CHO indication message to the first base station 520-1, and the first base station 520-1 may transmit the message to the second base station 520-2, the third base station 520-3, and the fourth base station 520-4 satisfying the CHO event through the core network 530.

After transmitting the CHO indication, the terminal 510 waits for a time threshold until a PDCCH is received. Then, when the time threshold expires, the terminal 510 transmits the CHO indication and waits again for the time threshold until the PDCCH is received. Here, the time threshold means a timer for which the terminal 510 waits for a RACH-less handover after receiving the handover command message and may be set based on a physical time during which a packet is transmitted from the terminal 510 to a receiving end. The receiving end may include the second base station 520-2 that is a target cell and the third base station 520-3 and the fourth base station 520-4 that are candidate cells, and may be differently designated according to a user definition or a system setting.

In step S519, the second base station 520-2 that is the target cell transmits the PDCCH. Specifically, the second base station 520-2 transmits an uplink grant to the first base station 520-1 through the PDCCH. Here, the third base station 520-3 and the fourth base stations 520-4 that are remaining candidate satellites may release a resource reserved for a handover. Specifically, the CHO indication message may include information on a target of the target cell or the candidate cell. As an example, the third base station 520-3 and the fourth base station 520-4 receiving the CHO indication message may release the resource reserved for the handover upon recognizing that they are candidate cells in a relationship with the terminal 510.

Although FIG. 5 illustrates that the second base station 520-2 transmits the PDCCH, the present disclosure is not limited thereto and may include that any one of the candidate cells 520-3 and 520-4 changed to the target cell transmits the PDCCH when the target cell which is a handover target is changed. In addition, although FIG. 5 illustrates that the PDCCH is transmitted to the first base station 520-1, the present disclosure is not limited thereto and may include that the PDCCH is directly transmitted to the terminal 510.

In step S521, when the PDCCH is transmitted to the first base station 520-1, the terminal 510 transmits a radio resource control (RRC) connection reconfiguration complete. Specifically, when the PDCCH is received, the terminal 510 delivers that a radio resource configuration based on the RRC connection complete is normally applied to the second base station 520-2 that is the target cell. For example, the terminal 510 transmits a handover confirm message to the target cell 520-2 by using uplink grant information by the received PDCCH.

In step S523, the second base station 520-2 that is the target cell transmits a handover completion to the first base station 520-1 that is a serving cell. Upon receiving the handover complete message, the first base station 520-1 disconnects a connection with the terminal 510 and releases a resource allocated to the terminal 510. In addition, the first base station 520-1 transmits a sequence number (SN) status and data to the second base station 520-2 to prevent redundant transmission of data and loss of data.

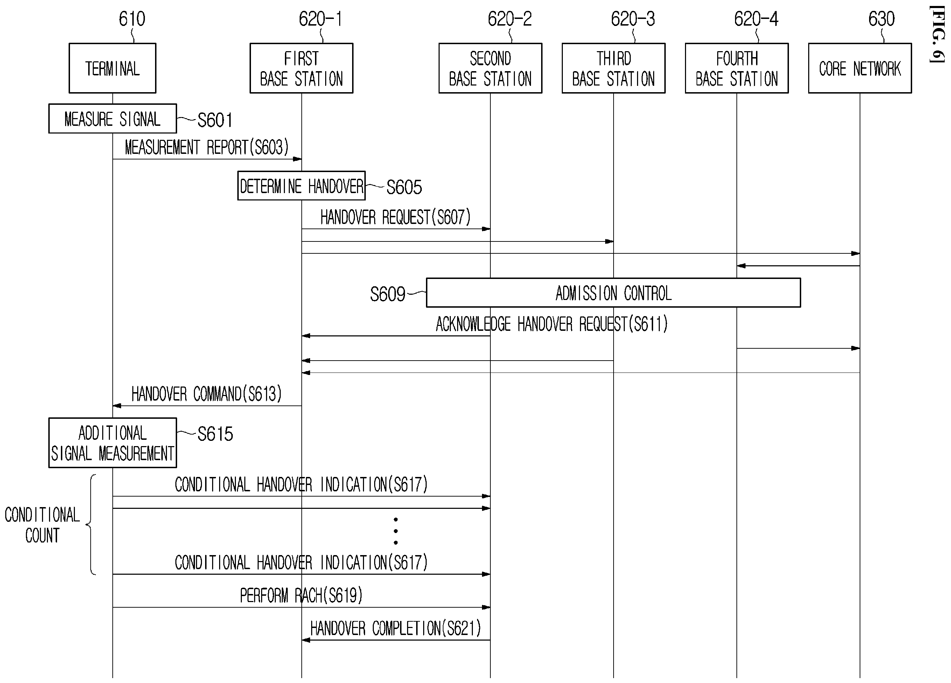

Hereinafter, a process in which a conditional handover (CHO) procedure is performed upon a failure of a RACH-less handover will be described through FIG. 6. FIG. 6 illustrates an example of a conditional handover (CHO) procedure in a wireless communication system according to an embodiment of the present disclosure. Hereinafter, for convenience of description, a serving satellite (or a serving cell) will be referred to and described as a first base station 620-1, and each of a target satellite (or a target cell) and a candidate satellite (or a candidate cell) may correspond to any one of a second base station 620-2, a third base station 620-3, and a fourth base station 620-4 and may be changed in a procedure described below. In addition, the base stations 620-2, 620-3, and 620-4 may be collectively referred to as neighbor cells or neighbor base stations.

Referring to FIG. 6, in step S601, a terminal 610 measures a signal. Specifically, the terminal 610 measures signal strength of the base stations 620-1, 620-2, 620-3, and 620-4 to reserve a resource for a handover. The terminal 610 may measure the strength of a signal at a predetermined cycle, and the predetermined cycle may be referred to as a measurement interval in the present disclosure.

Specifically, the terminal 610 may measure the signal strength of the base stations 620-1, 620-2, 620-3, and 620-4 and thus detect a preparation event for a handover. As an example, when the strength or quality of a measured signal is less than or equal to a predefined threshold or within a predetermined range, the terminal 610 may determine that a preparation event for a handover is detected. In addition, as an example, when the strength or quality of signals provided by the neighbor base stations 520-2, 520-3, and 520-4 exceeds the strength or quality of a signal provided by the first base station 520-1 that is a serving cell by a specific threshold, the terminal 510 may determine that a preparation event for a handover is detected.

In step S603, the terminal 610 transmits a measurement report to the first base station 620-1. Specifically, the terminal 610 periodically measures the strength of signals of the first base station 620-1 and the base stations 620-2, 620-3, and 620-4 and transmits a measurement report message. The measurement report may include at least a portion of set elements of the measurement report. For example, the measurement configuration of a measurement report may include a measurement object, a reporting configuration, a measurement ID, a quantity configuration, and a measurement gap. As an example, the terminal 610 may measure at least one of a signal to interference and noise ratio (SINR), reference signal received quality (RSRQ), and reference signals received power (RSRP) for the first base station 620-1 and the base stations 620-2, 620-3, and 620-4. Furthermore, the terminal 610 may measure a received signal strength indicator (RSSI), which is the power strength of a received signal, and a signal to noise ratio (SNR) that is a ratio between a signal and noise, but is not limited thereto.

In step S605, the first base station 620-1 determines a handover. Specifically, the first base station 620-1 identifies at least one of RSRP, RSRP, or SINR through the received measurement report. Here, the first base station 620-1 may determine a handover when the measured strength or quality of a signal is less than or equal to a predefined threshold or within a predetermined range. In addition, as an example, when the strength or quality of signals provided by the neighbor base stations 620-2, 620-3, and 620-4 exceeds the strength or quality of a signal provided by the first base station 620-1 that is a serving cell by a specific threshold, the terminal 610 may determine a handover. In addition, as an example, when the strength or quality of signals provided by the neighbor base stations 620-2, 620-3, and 620-4 exceeds the strength or quality of a signal provided by the first base station 620-1 that is a serving cell by a specific threshold, the first base station 620- 1 may determine a handover.

In step S607, the first base station 620-1 transmits a handover request. Specifically, the first base station 620-1 transmits a handover request message to a target cell. The target cell may be determined based on measurement reports for the base stations 620-2, 620-3, and 620-4. As an example, the target cell may be determined based on RSRP, an RSSI, RSRQ, and an SINR for the base stations 620-2, 620-3, and 620-4, a traffic load of each base station, a priority order, a speed of the terminal 610, a frequency band, a call state, and UE capabilities. Hereinafter, for convenience of description, it is assumed that the second base station 620-2 is determined to be a target cell, and it should be noted that the target cell may be changed according to the progress of the steps. Likewise, the third base station 620-3 and the fourth base station 620-4 are described under an assumption that the third base station 520-3 and the fourth base station 520-4 are determined as candidate cells, but may be changed according to the progress of the steps.

The handover request message includes information on the terminal 610 and may include a UE identity, a source cell ID, a target cell ID, a terminal context, target cell information, an E-UTRAN radio access bearer (E-RAB), and the like, and is not limited thereto. Meanwhile, the first base station 620-1 may transmit the handover request message to the third base station 620-3 and the fourth base station 620-4, which are candidate cells. For example, the first base station 620-1 may directly transmit the handover request message to the third base station 620-3 or indirectly transmit the handover request message via a core network 630. Likewise, it goes without saying that the first base station 620-1 may transmit the handover request message to the second base station 620-2, which is a target cell, through the core network 630. That is, the first base station 620-1 transmits the handover request message to candidate satellites satisfying a handover event. Here, the handover request message may be transmitted through an inter satellite link (ISL) or a feeder link. The first base station 620-1 may determine a link by comparing a delay time occurring through the inter satellite link and a delay time occurring through the feeder link, and transmit the handover request message by utilizing the link.

In step S609, each of the second base station 620-2 that is a target cell and the third base station 620-3 and the fourth base station 620-4 that are candidate cells performs admission control. Specifically, the second base station 620-2 determines whether to accept a handover request based on the handover request message and may reject the handover request when network resources are insufficient or quality degradation is concerned. For example, the second base station 620-2 may determine whether to accept the handover request by calculating an available bandwidth, frequency resources, a cell capacity, quality of service (QoS) requirements, and the like.

In step S611, each of the second base station 620-2 that is a target cell and the third base station 620-3 and the fourth base station 620-4 that are candidate cells transmits a handover request acknowledge. Specifically, the second base station 620-2 transmits a handover request acknowledge message to the first base station 620-1 when it is determined that a handover is possible as a result of performing the admission control. Meanwhile, the third base station 620-3 and the fourth base station 620-4 may transmit the handover request acknowledge message to the first base station 620-1. For example, the third base station 620-3 and the fourth base station 620-4 may directly transmit the handover request acknowledge message to the first base station 620-1 or indirectly transmit the handover request acknowledge message via the core network 630. Likewise, it goes without saying that the second base station 620-2 may transmit the handover request acknowledge message to the first base station 620-1 through the core network 630.

In step S613, the first base station 620-1 that is a serving cell transmits a handover command. Specifically, the first base station 620-1 may transmit a handover command message to the terminal 610. The handover command message may include information on the second base station 620-2 that is a target cell and the third base station 620-3 and the fourth base station 620-4 that are candidate cells, and the information may include a cell radio network temporary identifier (C-RNTI), a timing advance (TA), and location information. Thus, the first base station 620-1 may allocate a radio network temporary identifier (RNTI) (e.g., a group (G)-RNTI, a C-RNTI) for broadcast or multicast to the terminal 610. The corresponding RNTI may be provided in advance through system information or may be provided together with a configuration for measurement. The aforementioned steps S601 to S613 may be referred to as a handover preparation step and may be understood as a process of reserving a resource for performing a handover.

In step S615, the terminal 610 performs an additional signal measurement. This may be understood as the terminal 610 detecting an execution event for a handover. Specifically, the terminal 610 additionally measures signal strength of the base stations 620-2, 620-3, and 620-4 that are neighbor cells to perform a RACH-less handover or a CHO. As an example, the terminal 610 may measure at least one of an SINR, RSRQ, and RSRP of the first base station 620-1 that is a serving cell and the base stations 620-2, 620-3, and 620-4 that are the neighbor cells. The following description assumes that the second base station 620-2 is maintained as the target cell and the third base station 620-3 and the fourth base station 620-4 are maintained as the candidate cells, despite the additional signal measurement of the terminal 610, but targets of the target cell and the candidate cells may be certainly changed by the additional signal measurement of the terminal 610.

In step S617, the terminal 610 transmits a CHO indication. Specifically, when at least one of the second base station 620-2, the third base station 620-3, and the fourth base station 620-4 satisfies a CHO event, the terminal 610 transmits a CHO indication message to a cell satisfying the CHO event. Here, after transmitting the CHO indication message, the terminal 610 waits for a time threshold until a PDCCH is received. Then, when the time threshold expires, the terminal 610 transmits the CHO indication again and waits again for the time threshold until the PDCCH is received. The terminal 610 repeats the above-described processing as many times as a conditional count. Here, the conditional count may mean the number of times of repeating a process of step S617 and may be understood as a maximum number of times of repetition. As an example, the conditional count may be determined based on a handover interruption time according to a RACH, a physical time during which a packet is transmitted from the terminal 610 to a receiving end, and a handover failure timer.

In step S619, when a PDCCH is not received during the conditional count, the terminal 610 performs a RACH. The terminal 610 obtains uplink grant information of the first base station 620-1 through a RACH procedure, and transmits a handover confirm message to the second base station 620-2 by utilizing the uplink grant information. Specifically, the terminal 610 transmits a preamble to the second base station 620-2, and the second base station 620-2 may transmit a response to a random access (RA) to the terminal 610. Next, the terminal 610 transmits a radio resource control (RRC) connection reconfiguration complete to the second base station 620-2 to notify that a radio resource configuration according to an RRC connection complete is normally applied.

In step S621, the second base station 620-2 that is the target cell transmits a handover completion to the first base station 620-1 that is a serving cell. Upon receiving the handover complete message, the first base station 620-1 disconnects a connection with the terminal 610 and releases a resource allocated to the terminal 610. In addition, the first base station 620-1 transmits a sequence number (SN) status and data to the second base station 620-2 to prevent redundant transmission of data and loss of data.

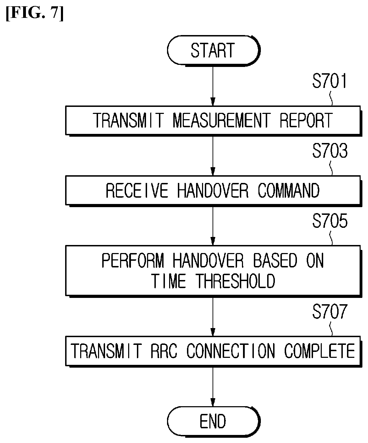

FIG. 7 illustrates an example of a procedure of operating a terminal in a wireless communication system according to an embodiment of the present disclosure.

Referring to FIG. 7, in step S701, a terminal transmits a measurement report. Specifically, the terminal periodically measures the strength of signals of a serving cell and a neighbor cell and transmits a measurement report message. As an example, the terminal may measure at least one of an SINR, RSRQ, RSRP, an RSSI, and an SNR for the serving cell and the neighbor cell.

In step S703, the terminal receives a handover command. Specifically, the terminal receives a handover command message from the serving cell, the message may include information on a target cell and a candidate cell, and the information may include a C-RNTI, a timing advance (TA), and location information.

In step S705, the terminal performs a handover based on a time threshold. The terminal may perform an additional signal measurement before performing the handover. This may be understood as the terminal detecting an execution event for the handover. Specifically, the terminal additionally measures signal strength for base stations that are neighbor cells in order to perform a RACH-less handover or a CHO. As an example, the terminal may measure at least one of an SINR, RSRQ, and RSRP for the serving cell and the neighbor cell.

Specifically, the terminal performs the RACH-less handover and the CHO based on the time threshold and the conditional count. More specifically, after transmitting the CHO indication, the terminal waits for the time threshold until receiving a PDCCH and repeats the above-described processing as many as the conditional count.

In step S707, the terminal transmits the RRC connection complete. Specifically, after attempting the RACH-less handover, the terminal 110 transmits the RRC connection complete to the target cell when the handover is successful based on a procedure of performing the CHO upon failure of receiving the PDCCH during the time threshold and the conditional count. As an example, when the PDCCH is received, the terminal informs the target cell that a radio resource configuration is normally applied according to the RRC connection complete.

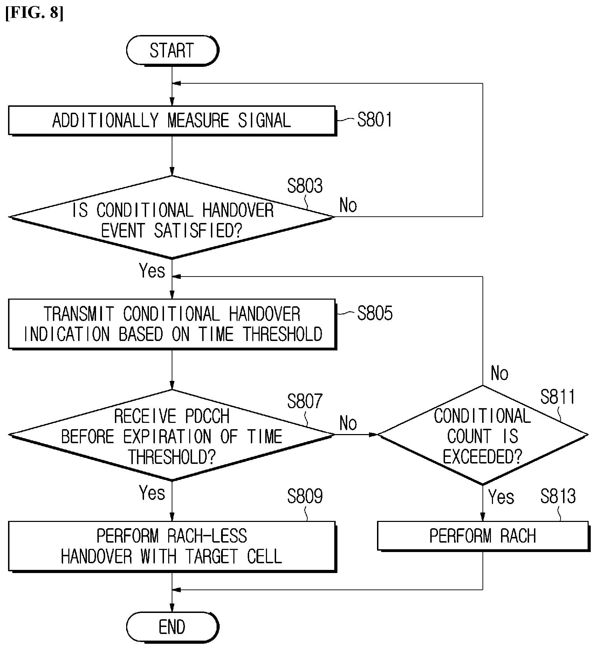

FIG. 8 illustrates an example of a procedure of performing a handover based on a time threshold according to an embodiment of the present disclosure.

Referring to FIG. 8, in step S801, a terminal performs an additional signal measurement. Specifically, the terminal additionally measures signal strength of a neighbor cell in order to perform a RACH-less handover or a CHO. As an example, the terminal may measure at least one of an SINR, RSRQ, and RSRP for the serving cell and the neighbor cell. A step following the additional signal measurement of the terminal may be referred to as a handover execution step.

In step S803, the terminal determines whether a CHO event is satisfied. The terminal additionally measures a signal to actually perform a handover and performs the handover when the CHO event is satisfied. Whether the CHO event is satisfied may be determined by the terminal at every predetermined period, and when the CHO event is not satisfied, the terminal performs step S801 again.

The CHO event may be defined as a condition for performing a handover, for example, when a RSSI that is power strength, an SNR that is a ratio between a signal and noise, and signal quality drop below a predefined threshold or enter within a predetermined range, the CHO event may be satisfied. The CHO event may be set more narrowly than a condition in which a serving cell reviews measured signal strength or quality to reserve a resource in a handover preparation step.

In step S805, when the CHO event is satisfied, the terminal transmits a CHO indication based on a time threshold. Specifically, when at least any one of a target cell and a candidate cell satisfies the CHO event, the terminal transmits a CHO indication message to a cell satisfying the CHO event.

As an example, the terminal transmits the CHO indication message to the serving cell, and the serving cell may transmit the CHO indication message to the target cell and the candidate cell satisfying the CHO event. As another example, the terminal transmits the CHO indication message to the serving cell, and the serving cell may transmit the CHO indication message to the target cell and the candidate cell satisfying the CHO event through a core network.

After transmitting the CHO indication, the terminal waits for the time threshold until a PDCCH is received. Then, when the time threshold expires, the terminal transmits the CHO indication and waits again for the time threshold until the PDCCH is received. Here, the time threshold means a timer for which the terminal waits for a RACH-less handover after receiving the handover command message and may be set based on a physical time during which a packet is transmitted from the terminal to a receiving end. The receiving end may include the target cell and the candidate cell and may be differently designated according to a user definition or a system setting.

In step S807, the terminal determines whether the PDCCH is received before expiration of the time threshold. First, after transmitting the CHO indication, the terminal waits for the time threshold until the PDCCH is received. Specifically, the PDCCH may be transmitted from the target cell to the serving cell, and is not limited thereto, and the PDCCH may be directly delivered from the target cell to the terminal.

The time threshold means a specific time for waiting after transmitting the CHO indication message and until the PDCCH is received from the target cell. The specific time may be referred to as *t_{RACHless}* and may be mixedly used hereinafter. That is, the time threshold means a timer for which a terminal 110 waits for a RACH-less handover after receiving a handover command message, and may be defined as the physical time during which the packet is transmitted from the terminal to the receiving end. As an example, the time threshold may be defined as a maximum round trip time of the packet from the terminal to the receiving end. For example, the maximum round trip time may be determined as twice a value obtained by dividing a distance from the terminal to the receiving end by a speed of light, and may be corrected by considering interference factors such as inter-satellite routing, a network processing delay, signal interference, and a physical obstacle.

For example, when an altitude of a regenerative satellite that is a receiving end is 600 km, about 12.89 ms corresponding to twice a one-way time value obtained by dividing a straight-line distance between the terminal and the satellite by the speed of light may be determined as a maximum round trip time. In addition, the maximum round trip time may be corrected by an interference factor, and for example, a result value obtained by increasing the maximum round trip time by a predetermined ratio may be determined to be the maximum round trip time.

Here, the receiving end may be set as a target cell that is a handover target, and when any one of candidate cells is changed to the handover target, the candidate cell changed to the target cell may be set as the receiving end.

In step S809, when a PDCCH is received before expiration of the time threshold, the terminal performs a RACH-less handover with the target cell. Specifically, when the target cell transmits an uplink grant through the PDCCH, the terminal completes the handover to the target cell without a RACH process.

In step S811, when the PDCCH is not received before the expiration of the time threshold, the terminal determines whether a conditional count is exceeded. The conditional count may mean a specific number of times that the terminal transmits a CHO indication message for performing a RACH. The specific number of times may be referred to as *N_{RACHless}* and may be mixedly used hereinafter. That is, the conditional count may mean the number of times of transmitting a CHO indication, and may be understood as a maximum number of times of repetition. As an example, the conditional count may be determined based on a handover interruption time according to a RACH, a physical time during which a packet is transmitted from the terminal to a receiving end, and a handover failure timer. In addition, the conditional count may be determined in consideration of the time threshold.

For example, as the altitude of the regenerative satellite that is the receiving end is 600 km, the time threshold may be set to 12.89 ms, and a handover interruption time may be set to 8.5 ms. In addition, a total sum of the time threshold and the handover interruption time that are repeated according to the conditional count should be smaller than a handover failure timer T304 (50 ms). That is, since the total sum of the time threshold and the handover interruption time repeated according to the conditional count should be smaller than 50 ms that is a value of the handover failure timer T304, the conditional count may be set to a maximum of 3 (50ms>12.89ms*3+8.5ms).

In step S813, when the number of times the terminal has transmitted the CHO instruction exceeds the conditional count, the terminal performs a RACH. Meanwhile, when the number of times the terminal has transmitted the CHO instruction does not exceed the conditional count, the terminal repeats the steps from S805 and below again.

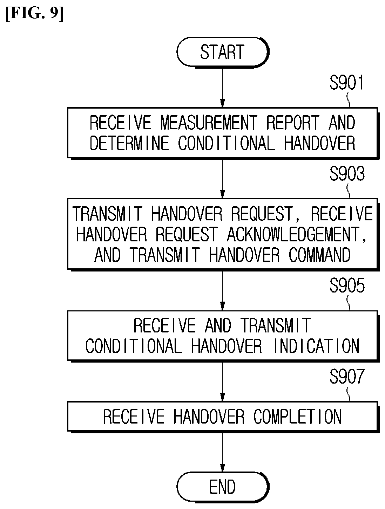

FIG. 9 illustrates an example of a procedure of operating a serving cell in a wireless communication system according to an embodiment of the present disclosure.

Referring to FIG. 9, in step S901, a serving cell receives a measurement report and determines a CHO. Specifically, the serving cell checks RSRP, RSRQ, or an SINR through the measurement report transmitted from a terminal. Next, the serving cell may determine the handover when a measured signal strength or quality falls below a predefined threshold or enters a predetermined range. Also, as an example, the serving cell may determine the handover when a signal strength or quality provided by neighbor base stations is greater than or equal to a signal strength or quality provided by the serving cell by a specific threshold or more.

In step S903, the serving cell transmits a handover request, receives a handover request acknowledgment, and transmits a handover command.

Specifically, the serving cell transmits a handover request message to a target cell. The target cell may be determined based on measurement reports for base stations which are neighbor cells. As an example, the target cell may be determined based on RSRP, an RSSI, RSRQ, an SINR for the base stations, a traffic load of each base station, a priority order, a speed of the terminal, a frequency band, a connection status, and UE capabilities.

The handover request message includes information on the terminal and may include a UE identity, a source cell ID, a target cell ID, a terminal context, target cell information, an E-UTRAN radio access bearer (E-RAB), and the like, and is not limited thereto. The serving cell may transmit the handover request message directly to a candidate cell or indirectly via a core network. Similarly, of course, the serving cell may transmit the handover request message to the target cell through the core network.

When it is determined that the handover is possible as a result of performing admission control, the target cell transmits a handover request acknowledgment message to the serving cell. Meanwhile, the candidate cell may transmit the handover request acknowledgment message to the serving cell. For example, the candidate cell may transmit the handover request acknowledgment message directly to the serving cell or indirectly via the core network. Similarly, of course, the target cell may transmit the handover request message to the target cell through the core network.

The serving cell may transmit a handover command message to the terminal. The handover command message may include information on a target cell and a candidate cell, and the information may include a C-RNTI, a timing advance (TA), and location information. Thus, the serving cell may allocate an RNTI (e.g., a group (G)-RNTI, a C-RNTI) for broadcast or multicast to the terminal. The corresponding RNTI may be provided in advance through system information or may be provided together with a configuration for measurement.

The serving cell may use a feeder link or an ISL to transmit and receive the handover request message, the handover request acknowledgment message, and the handover command message. Specifically, the serving cell may determine a link to be used by comparing a latency occurring through the feeder link with a latency occurring through the inter-satellite link. For example, the serving cell may use a link having a longer delay time among the above-described links for stability of communication.

In step S905, the serving cell receives and transmits a CHO indication. Specifically, the serving cell receives the CHO indication from the terminal and transmits a CHO indication message to a cell satisfying a CHO event. As an example, the serving cell may directly transmit the message to a target cell and a candidate cell satisfying the CHO event. As another example, the serving cell may transmit the CHO indication message to the target cell and the candidate cell through the core network.

In step S907, the serving cell receives a handover completion. Specifically, after the serving cell transmits the CHO indication, as a PDCCH is transmitted and received before a time threshold expires and a CHO procedure for performing a RACH-less handover or a RACH is completed, the serving cell receives a handover complete message from the target cell. Upon receiving the handover complete message, the serving cell terminates a connection with the terminal and releases resources allocated to the terminal. In addition, the serving cell transmits an SN status and data to the target cell to prevent redundant transmission of data and loss of data.

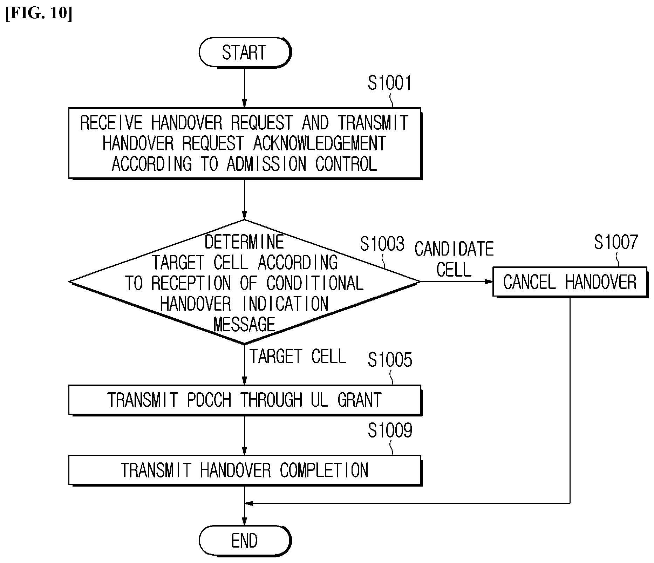

FIG. 10 illustrates an example of a RACH-less handover operation procedure of a neighbor cell in a wireless communication system according to an embodiment of the present disclosure.

Referring to FIG. 10, in step S1001, the neighbor cell receives a handover request and transmits a handover request acknowledgment according to admission control. The neighbor cell may mean a cell adjacent to a serving cell and may be determined using a neighbor cell list of the serving cell.

Specifically, the serving cell transmits a handover request message to a target cell among neighbor cells. The target cell may be determined based on measurement reports for the neighbor cells. As an example, the target cell may be determined based on RSRP, an RSSI, RSRQ, an SINR for the neighbor cells, a traffic load of each base station, a priority order, a speed of the terminal, a frequency band, a connection status, and UE capabilities.

The handover request message includes information on the terminal and may include a UE identity, a source cell ID, a target cell ID, a terminal context, target cell information, an E-UTRAN radio access bearer (E-RAB), and the like, and is not limited thereto. Meanwhile, the serving cell may transmit a handover request message to a candidate cell among the neighbor cells. For example, the serving cell may transmit the handover request message directly to a candidate cell or indirectly via a core network. Similarly, of course, the serving cell may transmit the handover request message to the target cell through the core network.

Each of the target cell and the candidate cell performs admission control. Specifically, the second base station 520-2 determines whether to accept a handover request based on the handover request message and may reject the handover request when network resources are insufficient or quality degradation is concerned.

Then, each of the target cell and the candidate cell transmits a handover request acknowledgment. Specifically, when it is determined that the handover is possible as a result of performing admission control, the target cell transmits a handover request acknowledgment message to the serving cell. Meanwhile, the candidate cell may transmit the handover request acknowledgment message to the serving cell. For example, the candidate cell may transmit the handover request acknowledgment message directly to the serving cell or indirectly via the core network. Similarly, of course, the target cell may transmit the handover request message to the target cell through the core network.

In step S1003, the neighbor cell determines a target cell according to reception of a CHO indication message. The CHO indication message may include information on a target of the target cell or the candidate cell.

In step S1005, when the target receiving the CHO indication message is the target cell, the target cell transmits an uplink grant through a PDCCH. Specifically, the target cell transmits the uplink grant to the serving cell through the PDCCH.

In step S1007, when the target receiving the CHO indication message is the candidate cell, the handover is canceled. That is, the candidate cell releases a resource reserved for the handover. The CHO indication message may include information on a target of the target cell or the candidate cell. As an example, the candidate cell receiving the CHO indication message may release the resource reserved for the handover upon recognizing that it is a candidate cell in a relationship with the terminal. Through the above-described method, the target cell performs a RACH-less handover with the terminal.

In step S1009, the target cell transmits a handover completion. Specifically, the target cell transmits a handover complete message to the serving cell and receives an SN status and data from the serving cell, thereby preventing redundant transmission of data and loss of data.

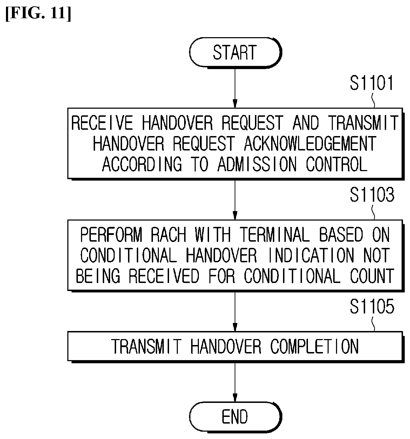

FIG. 11 illustrates an example of a CHO operation procedure of a target cell in a wireless communication system according to an embodiment of the present disclosure.

Referring to FIG. 11, in step S1101, the target cell receives a handover request and transmits a handover request acknowledgment according to admission control. Specifically, after receiving a handover request message from a serving cell, when it is determined that the handover is possible as a result of performing admission control, the target cell transmits a handover request acknowledgment message to the serving cell.

In step S1103, the target cell performs a RACH with a terminal, when a CHO indication is not received as many times as a conditional count. The conditional count may mean a specific number of times that the terminal transmits a CHO indication message for performing a RACH. The specific number of times may be referred to as *N_{RACHless}* and may be mixedly used hereinafter. That is, the conditional count may mean the number of times of transmitting a CHO indication, and may be understood as a maximum number of times of repetition. Specifically, the terminal obtains uplink grant information of the serving cell through a RACH procedure and utilizes the uplink grant information to transmit a handover confirm message to the target cell. More specifically, the terminal may transmit a preamble to the target cell, and the target cell may transmit a response to a RA to the terminal. Next, the terminal transmits a RRC connection complete to the target cell to notify that a radio resource configuration is normally applied according to the RRC connection complete. Even when the target cell cannot transmit the uplink grant through the PDCCH, the target cell performs the RACH with the terminal.

In step S1105, the target cell transmits a handover completion. Specifically, the target cell transmits a handover complete message to the serving cell and receives an SN status and data from the serving cell, thereby preventing redundant transmission of data and loss of data.

According to the above-described various embodiments, a handover may be performed without a RACH for a target cell. In addition, according to various embodiments, when a RACH-less handover cannot be performed, a handover may be performed with a RACH for a target cell through the above-described procedure. A RACH-less handover according to various embodiments may be performed in various scenarios. For example, when a target cell is a satellite base station, the above-described RACH-less handover may be performed. As an example, when there are multiple target cells that include at least one satellite base station and at least one terrestrial base station, the conditional handover without RACH may be applied only to the satellite base station, and a conditional handover with RACH may be performed for the terrestrial base station. In this case, the above-described timing-related information and an uplink grant may be provided only for the target cell that is a satellite base station.

Meanwhile, those of ordinary skill in the technical field to which the present embodiment pertains will be able to understand that various modifications and alterations may be made without departing from the above-described essential features. Therefore, the disclosed methods should be considered in a descriptive rather than a limiting sense. The scope of the present disclosure is defined by the appended claims rather than the foregoing description, and all variations within the equivalent scope thereof shall be construed as being included in the present disclosure.

### Industrial Applicability

The present invention may be used by a device for performing a handover in a wireless communication system.

## Claims

1. A method for operating a base station in a wireless communication system, the method comprising:
receiving a measurement report message from a terminal;
transmitting a handover request message to a target cell and a candidate cell based on the measurement report message;
receiving a handover request acknowledge message from the target cell and the candidate cell;
transmitting a handover command message to the terminal;
receiving a conditional handover indication message from the terminal upon detecting a conditional handover event based on an additional measurement of the terminal for the target cell and the candidate cell;
transmitting the conditional handover indication message to the target cell; and
transmitting an uplink grant to the terminal upon receiving the uplink grant from the target cell,
wherein a time difference between transmission of the conditional handover indication from the terminal and reception of the uplink grant at the terminal is less than or equal to a set time threshold.

2. The method of claim 1, wherein the handover request message is transmitted using at least one of an inter satellite link (ISL) and a feeder link (FL).

3. The method of claim 2, wherein the handover request message is transmitted through a link that is determined based on a first delay time occurring through the ISL and a second delay time occurring through the FL.

4. The method of claim 1, wherein the conditional handover indication message is transmitted to the target cell and the candidate cell that satisfy the conditional handover event.

5. The method of claim 1, wherein the time threshold is set based on a physical time required for a packet to be transmitted from the terminal to a receiving end, and
the receiving end is one of the target cell and the candidate cell.

6. The method of claim 5, wherein the time threshold is set based on a maximum round trip time (RTT) of the packet from the terminal to the receiving end.

7. The method of claim 1, wherein the conditional handover indication message is received by the base station up to a maximum conditional count for the time threshold.

8. The method of claim 7, wherein the conditional count is determined based on a handover interruption time according to a random access channel (RACH), a RTT, a handover failure timer, and the time threshold.

9. The method of claim 7, wherein the receiving of the handover complete message includes receiving the handover complete message based on a RACH being performed by the terminal and the target cell, when the uplink grant is not received from the target cell for the conditional count.

10. A base station in a wireless communication system, the base station comprising:
a transceiver; and
a processor coupled to the transceiver,
wherein the processor is configured to:
receive a measurement report message from a terminal;
transmit a handover request message to a target cell and a candidate cell based on the measurement report message;
receive a handover request acknowledge message from the target cell and the candidate cell;
transmit a handover command message to the terminal;
receive a conditional handover indication message from the terminal upon detecting a conditional handover event based on an additional measurement of the terminal for the target cell and the candidate cell;
transmit the conditional handover indication message to the target cell; and
transmit an uplink grant to the terminal upon receiving the uplink grant from the target cell,
wherein a time difference between transmission of the conditional handover indication from the terminal and reception of the uplink grant at the terminal is less than or equal to a set time threshold.

11. A method for operating a terminal in a wireless communication system, the method comprising:
transmitting a measurement report message to a base station;
performing a measurement for a target cell and a candidate cell upon receiving a handover command message from the base station;
transmitting a conditional handover indication message to the base station based on satisfaction of a conditional handover event of at least one of the target cell and the candidate cell; and
performing a random access channel (RACH)-less handover or a conditional handover with the target cell upon receiving an uplink grant before passage of a time threshold following the transmission of the conditional handover indication message.

12. The method of claim 11, further comprising retransmitting the conditional handover message based on the uplink grant not being received before the passage of the time threshold following the transmission of the conditional handover indication message.

13. The method of claim 12, wherein the conditional handover indication message is retransmitted as many times as a set maximum conditional count.

14. The method of claim 12, wherein the retransmitting of the conditional handover indication message comprises retransmitting the conditional handover indication message based on a transmission count of the conditional handover indication message being less than or equal to a set conditional count.

15. A terminal in a wireless communication system, the terminal comprising:
a transceiver; and
a processor coupled to the transceiver,
wherein the processor is configured to:
transmit a measurement report message to a base station;
perform a measurement for a target cell and a candidate cell upon receiving a handover command message from the base station;
transmit a conditional handover indication message to the base station based on satisfaction of a conditional handover event of at least one of the target cell and the candidate cell; and
perform a random access channel (RACH)-less handover or a conditional handover with the target cell upon receiving an uplink grant before passage of a time threshold following the transmission of the conditional handover indication message.
